# EUROPEAN PATENT APPLICATION

(11) **EP 3 641 092 A1**
(43) Date of publication of application: **22.04.2020**
(21) Application number: 18200777.3
(22) Date of filing: 16.10.2018
(51) Int. Cl.: H02J 7/00, B60L 53/12, B60L 53/38

(54) **MOBILE CHARGING APPARATUS FOR CHARGING AN ELECTRIC VEHICLE, CHARGING SYSTEM AND METHOD FOR CHARGING AN ELECTRIC VEHICLE**

(71) Applicant: Valeo Siemens eAutomotive Germany GmbH, 91056 Erlangen (DE)
(72) Inventor: Treml, Ulrich, 91080 Spardorf (DE)
(74) Representative: Dr. Gassner & Partner mbB

(57) **Abstract**

Mobile charging apparatus (2) for charging an electric vehicle (3), comprising a drive unit (8) configured to move the mobile charging apparatus (2) on a ground (9) and a primary inductive unit (11) being configured to transfer electric energy from the mobile charging apparatus (2) to a secondary inductive unit (11) of the electric vehicle (3) and an energy storage unit (12) connectable to the primary inductive unit (11) for supplying the electric energy to the primary inductive unit (11).

## Description

The present invention refers to a mobile charging apparatus for charging an electric vehicle, comprising a drive unit configured to move the mobile charging apparatus on a ground and a primary inductive unit being configured to transfer electric energy from the mobile charging apparatus to a secondary inductive unit of the electric vehicle.

Besides, the present invention refers to a charging system and a method for charging an electric vehicle.

For charging an electric vehicle by means of transferring energy from a primary inductive unit located outside of the electric vehicle to a secondary inductive unit of the electric vehicle it is known to arrange a primary inductive unit in a ground, on which the electric vehicle drives. The electric vehicle may then be moved by a driver or by an automatic parking device of the vehicle to a position in which the primary inductive unit and the secondary inductive unit are positioned close to each other. To facilitate the positioning of the inductive units it has already been proposed to use a mobile charging apparatus that carries the primary inductive unit and that moves the primary inductive unit to the vehicle:
The document DE 10 2015 015 698 A1 discloses an energy transfer apparatus for transferring energy to a vehicle, comprising a coupling device configured to create an effective connection between the energy transfer apparatus and the vehicle in order to transfer energy into the vehicle. The coupling device is self-driven and configured to move below the vehicle. The coupling device is connected to a docking station, which is connected to an electric grid, by means of an electric line. The coupling device comprises a cable reel for spooling the energy line.

However, cable reels comprise mechanical components that can be damaged so that the energy line cannot be spooled properly. The energy line may then turn into an obstacle for the coupling device and make a movement of the coupling device difficult or impossible.

Thus, it is an object of the present invention to provide a mobile charging apparatus that is more robustly operable.

The above object is solved by a mobile charging apparatus as initially described, further comprising an energy storage unit connectable to the primary inductive unit for supplying the electric energy to the primary inductive unit.

The present invention aims to store the electric energy that is to be transferred to the electric vehicle in the energy storage unit being movable together with the whole mobile charging apparatus. Advantageously, an energy line, such as a cable, and a cable reel that spools the energy line can be omitted so that a mechanical failure source is omitted. Accordingly, the energy line may not obstruct a moving path of the mobile charging apparatus and, therefore, allows a more robust operation of the mobile charging apparatus.

Typically, the mobile charging apparatus comprises a basis, at which the drive unit, the primary inductive unit, the energy storage unit and particularly other components of the mobile charging apparatus are arranged, so that all components are movable relative to the ground. The primary inductive unit may comprise a coil or an induction plate. Besides, the mobile charging apparatus may comprise a power electronics unit being configured to convert a DC voltage provided by the energy storage unit into an AC current and to supply it to the primary inductive unit.

Preferably, the energy storage unit is a rechargeable battery. Thereby, the mobile charging apparatus can be recharged when it is not charging the electric vehicle.

Advantageously, the mobile charging apparatus comprises a move unit configured to move the primary inductive unit relative to the ground in a direction perpendicular to the ground. Thus, the primary inductive unit can be positioned not only within a plane parallel to the ground by moving the mobile charging apparatus by means of the drive unit but also be moved towards an underbody of the electric vehicle.

Furthermore, the mobile charging apparatus according to the invention may comprise a control unit configured to determine a position information representing a target position of the primary inductive unit for transferring the electric energy. Typically, the mobile charging apparatus comprises a sensor unit with one or more of sensor elements chosen from a group comprising an image sensor, a radar sensor, an ultrasonic sensor, a magnetic sensor or other sensors that allow to detect the position of the secondary coil unit.

Therein, the control unit may be configured to control the driving unit and/or the move unit to position the primary inductive unit according to the position information. Thus, the mobile charging apparatus may autonomously seek and move to the target position, which may be a two-dimensional position parallel to the ground or a three-dimensional position at a specific height above the ground.

Preferably, the control unit is configured to determine the position information by optimizing the relative position of the primary inductive unit to the secondary inductive unit. Thereby, an optimum energy conversion efficiency may be achieved.

Furthermore, the present invention refers to a charging system, comprising a mobile charging apparatus according to the invention and the electric vehicle and/or a stationary charging apparatus configured to charge the energy storage unit of the mobile charging apparatus.

Typically, the stationary charging apparatus is connectable to an energy grid for obtaining electric energy to charge the energy storage unit of the mobile charging apparatus. Preferably, the stationary charging apparatus comprises an electric contact that is connectable to a corresponding electric contact of the mobile charging apparatus for transferring the electric energy from the stationary charging apparatus to the mobile charging apparatus. This allows fast charging of the energy storage unit of the mobile charging apparatus.

Finally, the present invention refers to a method for charging an electric vehicle, comprising the following steps: moving a mobile charging apparatus on a ground, supplying electric energy from an energy storage unit of the mobile charging apparatus to a primary inductive unit of the mobile charging apparatus, and transferring the electric energy by means of the primary inductive unit from the mobile charging apparatus to a secondary inductive unit of the electric vehicle.

All statements referring to the inventive mobile charging apparatus apply analogously to the inventive charging system and to the inventive method so that the aforementioned advantages may be achieved by them as well.

Further details and advantages of the present invention are disclosed in the following. Therein, reference is made to the schematic drawing.

The Fig. is a block diagram of an embodiment of a charging system 1, comprising an embodiment of a mobile charging apparatus 2, an electric vehicle 3 and a stationary charging apparatus 4. The electric vehicle 3 is a fully or partially electrically propelled vehicle and comprises an energy storage unit 5, such as a high-voltage battery, which is chargeable via a power electronics unit 6 by a secondary inductive unit 7.

The mobile charging apparatus 2 comprises a drive unit 8 configured to move the mobile charging apparatus on a ground 9. Exemplarily, the mobile charging apparatus 2 comprises wheels 10 as a part of the drive unit 8. Furthermore, the mobile charging apparatus comprises a primary inductive unit 11 that is configured to transfer electric energy from the mobile charging apparatus 2 to the secondary inductive unit 7 of the electric vehicle 3.

The primary inductive unit 11 is supplied by an energy storage unit 12, which is a rechargeable battery. The energy storage unit 12 is connected to the primary inductive unit 11 via a power electronics unit 13 of the mobile charging apparatus 2 that is configured to convert a DC voltage provided by the energy storage unit 12 into an AC current provided to the primary inductive unit 11. The AC current has a suitable amperage and frequency to generate a magnetic field that induces an AC voltage in the secondary inductive unit 7. The induced AC voltage is converted by the power electronics unit 6 of the vehicle 3 into an DC voltage for charging the energy storage device 5 of the vehicle 3.

Furthermore, the mobile charging apparatus 2 comprises a move unit 14 configured to move the primary inductive unit 11 relative to the ground 9 in a direction perpendicular to the ground 9. Furthermore, a control unit 15 is provided that is configured to control an operation of the driving unit 8 and the move unit 14. The control unit 15 is configured to determine a position information representing a target position of the primary inductive unit 11 for transferring the electric energy from the energy storage unit 15 via the inductive units 7, 11 to the energy storage unit 5 of the vehicle 3. Thereto, the mobile charging apparatus 2 comprises a sensor unit 16 with one or more of sensor elements chosen from a group comprising an image sensor, a radar sensor, an ultrasonic sensor, a magnetic sensor or other sensors that allow to detect the position of the secondary coil unit 7.

As an application example, the scenery in the Fig. may be considered as a parking lot or a garage in which the electric vehicle 3 is parked by a driver. After having parked the electric vehicle 3 the mobile charging apparatus 2 drives autonomously below an underbody 17 of the electric vehicle 3 and the sensor unit 16 detects the position of the secondary coil unit 7. After having reached a position in a plane parallel to the ground 9 in which the inductive units 11, 7 have a congruent relative position, the control unit 15 determines the relative position of the primary inductive unit in a direction perpendicular to the ground 9. The control unit 15 controls the move unit 14 to move the primary inductive unit 11 towards the secondary inductive unit 7 until a maximum energy conversion efficiency is realized.

The control unit 15 then controls the power electronics unit 13 to supply the primary inductive unit 11 with the electric energy stored in the energy storage unit 12 of the mobile charging apparatus 2 for charging the electric storage unit 5 of the vehicle 3. Upon detecting a termination event, which may represent that the energy storage unit 12 of the mobile charging apparatus 2 is discharged to a predefined threshold level or that the energy storage unit 5 of the electric vehicle 3 is charged to a predefined threshold level, the control unit 15 terminates supplying the primary inductive unit 14 by controlling the power electronics unit 13. Afterwards the control unit 15 controls the move unit 14 to move back the primary inductive unit 11 into an idle position and controls the drive unit 8 to move the mobile charging apparatus 2 to the stationary charging apparatus 4.

The stationary charging apparatus 4 comprises a docking unit 18 having an electric contact 19 that corresponds to an electric contact 20 of the mobile charging apparatus. When having moved the mobile charging apparatus 2 into a docking position, in which the electric contacts 19, 20 are conductively coupled with each other, the stationary charging apparatus 4 charges the energy storage unit 12 of the mobile charging apparatus 2 with electric energy obtained from an electric grid.

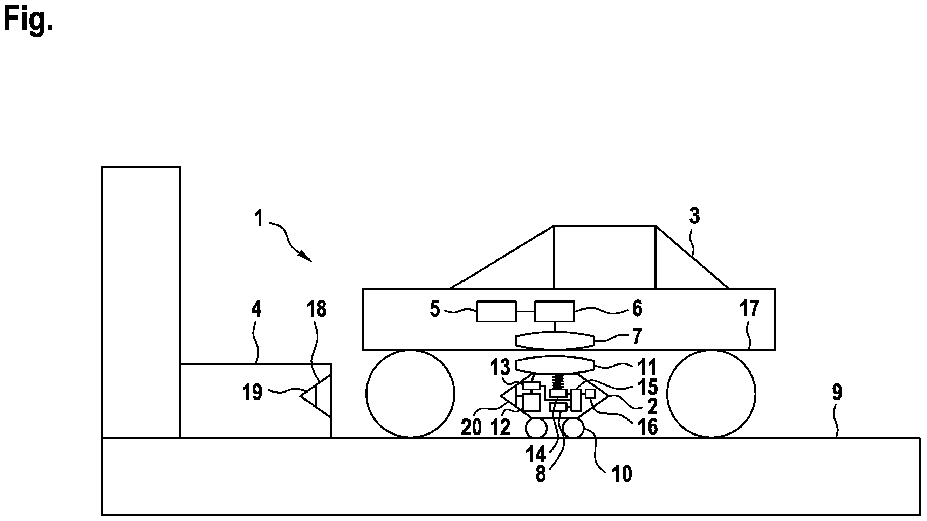

## Claims

1. Mobile charging apparatus (2) for charging an electric vehicle (3), comprising a drive unit (8) configured to move the mobile charging apparatus (2) on a ground (9) and a primary inductive unit (11) being configured to transfer electric energy from the mobile charging apparatus (2) to a secondary inductive unit (11) of the electric vehicle (3),
**characterized by**
an energy storage unit (12) connectable to the primary inductive unit (11) for supplying the electric energy to the primary inductive unit (11).

2. Mobile charging apparatus according to claim 1, wherein the energy storage unit (12) is a rechargeable battery.

3. Mobile charging apparatus according to claim 1 or 2, comprising a move unit (14) configured to move the primary inductive unit (11) relative to the ground (9) in a direction perpendicular to the ground (9).

4. Mobile charging apparatus according to any of the preceding claims, comprising a control unit (15) configured to determine a position information representing a target position of the primary inductive unit (11) for transferring the electric energy.

5. Mobile charging apparatus according to claims 3 and 4, wherein the control unit (15) is configured to control the move unit (14) to position the primary inductive unit (11) according to the position information.

6. Mobile charging apparatus according to claim 4 or 5, wherein the control unit (15) is configured to control the driving unit (8) to position the primary inductive unit (11) according to the position information.

7. Mobile charging apparatus according to any of claims 4 to 6, wherein the control unit (15) is configured to determine the position information by optimizing the relative position of the primary inductive unit (11) to the secondary inductive unit (7).

8. Charging system (1), comprising a mobile charging apparatus (2) according to any of the preceding claims and
- the electric vehicle (3) and/or
- a stationary charging apparatus (4) configured to charge the energy storage unit (12) of the mobile charging apparatus (2).

9. Method for charging an electric vehicle (3), comprising the following steps:
- moving a mobile charging apparatus (2) on a ground,
- supplying electric energy from an energy storage unit (12) of the mobile charging apparatus (2) to a primary inductive unit (11) of the mobile charging apparatus (2), and
- transferring the electric energy by means of the primary inductive unit (11) from the mobile charging apparatus (2) to a secondary inductive unit (7) of the electric vehicle (3).
